# EUROPEAN PATENT APPLICATION

(11) **EP 4 831 094 A1**
(43) Date of publication of application: **28.10.2026**
(21) Application number: 26174485.8
(22) Date of filing: 24.04.2026
(51) Int. Cl.: B65G 47/51

(54) **DYNAMIC ACCUMULATOR APPARATUS**

(30) Priority: 24.04.2025 IT 202500009228
(71) Applicant: Tiesse S.r.l., 43037 Lesignano de' Bagni (PR) (IT)
(72) Inventor: SARTORI, Elmo, 43037 LESIGNANO DE' BAGNI (PR) (IT)
(74) Representative: Silva, Valentina

(57) **Abstract**

Apparatus for diverting and accumulating a flow of articles from an upstream source to a downstream source, along a variable path comprising at least one inlet conveyor and one outlet conveyor, parallel to each other which determine respectively the inlet section and the outlet section of the path and define an inner area in which a carriage comprising a carriage belt moves, which is configured as a closed loop and is adapted to slide endlessly to transfer the flow of articles, from an inlet belt of the inlet conveyor to an outlet belt of the outlet conveyor, said carriage adapted to translate along said inlet conveyor and outlet conveyor according to two opposite forward and return directions, so as to widen or reduce the path of deviation of the flow of articles, wherein the carriage belt slides following a two-level path passing from an operating plane placed at the same level as the inlet conveyor or outlet conveyor on which the articles move to a return plane below and substantially parallel to the operating plane.

## Description

### FIELD OF APPLICATION OF THE INVENTION

The present invention relates to the field of article accumulators for diverting and accumulating a flow of articles from an upstream source to a downstream destination.

Specifically, these are dynamic accumulators for production, filling or packaging systems of articles. Generally, to prevent articles from being damaged, said accumulators operate without pressure, i.e. by keeping the articles spaced apart.

### STATE OF THE ART

Systems comprising a number of machines or workstations that handle articles are known in the art.

Said machines or workstations are usually connected by conveyors to transfer the articles from one machine to the next.

Among the machines there may be accumulator devices
designed to accumulate articles in order to compensate for any stoppages or slowdowns of said machines.

In fact, should one of said machines come to a halt, the flow of articles must be stopped, and all the machines upstream of the one that has stopped must also be halted.

The presence of an accumulator apparatus prevents all upstream machines from stopping, creating sufficient space to accumulate the articles produced upstream of the machine that has stopped, during the downtime.

Generally, accumulator apparatuses exist which can be of the dynamic type, i.e. they adjust the length of the accumulation path according to the production requirements of the plant at any given time.

Said accumulation apparatuses comprise conveyors interconnected by movable elements, such as belt conveyor carriages, to form a dynamic path that can be extended or shortened depending on the required accumulation space.

Said known accumulator apparatuses may comprise one or more carriages wherein a carriage belt is configured to receive articles and transfer them from an accumulator inlet belt to an outlet belt.

Said carriage belt is generally configured as a loop and runs entirely on the same plane as the inlet and outlet belts. This means that, in order to move said carriage belt - which is usually made of a modular chain - a disc is used that meshes with the side of the belt.

This type of motion transmission is not capable of transmitting high torques and therefore cannot be used to move heavy articles.

Furthermore, in the known art, when the accumulator comprises several carriages, these are moved together to form a dynamic path that extends or contracts in the same way across all the accumulation tracks, thereby limiting the flexibility of the apparatus.

When there are several carriages in the accumulator apparatus, there is an inner belt interposed between the carriages.

Generally speaking, said belt is configured as a loop and runs entirely on a single plane, which is the same plane as that occupied by the inlet and outlet belts. This means that, in order to drive said inner belt, which is usually made of a modular chain, a disc is used that meshes with the side of the belt.

This type of drive system is not capable of transmitting high torque and therefore cannot be used to convey heavy articles or to create long conveyor belts.

### EXPOSURE AND ADVANTAGES OF THE INVENTION

The technical problem underlying the present invention is that of providing an improved dynamic accumulator apparatus, structurally and functionally designed to overcome one or more of the above-mentioned limitations of the cited prior art.

In the context of the aforementioned problem, a primary aim of the invention is to develop an improved dynamic accumulator apparatus that offers maximum flexibility of use.

Another aim of the invention is to provide the industry with an improved dynamic accumulator apparatus capable of being extended to great lengths.

Furthermore, the invention is also intended to provide the industry with an improved dynamic accumulator apparatus that enables the handling of large quantities of articles, including heavy ones.

In particular, in an aspect of the present invention, an apparatus is provided for diverting and accumulating a flow of articles from an upstream source to a downstream source along a variable path.

Preferably, the apparatus comprises at least one inlet conveyor and one outlet conveyor, which determine the inlet section and the outlet section of the path, respectively.

Preferably, the inlet conveyor and the outlet conveyor are parallel to one another.

Preferably, the inlet conveyor and the outlet conveyor define an inner area within which a carriage moves.

Preferably, the carriage comprises a carriage belt.

Preferably, the carriage belt is configured as a closed loop.

Preferably, the carriage belt is adapted to slide endlessly to transfer the flow of articles, from an inlet belt of the inlet conveyor to an outlet belt of the outlet conveyor.

Preferably, said carriage is adapted to translate along said inlet conveyor and outlet conveyor according to two opposite forward and return directions, so as to widen or reduce the path of deviation of the flow of articles.

Preferably, the carriage belt slides following a two-level path passing from an operating plane placed at the same level as the inlet conveyor or outlet conveyor on which the articles move to a return plane below and substantially parallel to the operating plane.

The apparatus may optionally comprise two or more carriages.

Preferably, said two or more carriages are arranged in an inner area between an inlet conveyor and an outlet conveyor, parallel to each other determining respectively the inlet section and the outlet section of the path.

Preferably, the apparatus comprises at least one inner conveyor in said inner area.

Preferably, the inner conveyor comprises a first operating branch and a second operating branch along which an inner belt slides.

Preferably, the inner belt slides substantially parallel to the inlet and outlet belt conveyors.

Preferably, the inner belt slides on the same operating plane as the inlet and outlet conveyor belts.

Preferably, the first operating branch and the second operating branch are interposed between one carriage and the adjacent one.

Preferably, said carriages each comprise a respective carriage belt.

Preferably, the carriage belt is configured as a closed loop.

Preferably, the carriage belt is adapted to slide endlessly to transfer the flow of articles, from an inlet belt of the inlet conveyor to an outlet belt of the outlet conveyor and/or the inner belt.

Preferably, said carriages translate along said inlet conveyor or outlet conveyor and along the inner conveyor according to two opposite forward and return directions, so as to widen or reduce the path of deviation of the flow of articles.

Preferably, each carriage translates independently of the adjacent carriage.

Preferably, the carriage belt of said carriage slides following a two-level path.

Preferably, the two-level path runs from the operating plane placed at the same level as the inlet conveyor or outlet conveyor on which the articles move to the return plane below and substantially parallel to the operating plane.

Preferably, the carriage belt comprises a first curve preferably of 180° arranged on the operating plane to divert the flow of articles by 180°.

Preferably, the carriage belt comprises a second curve preferably of 180° arranged on the return plane.

Preferably, the carriage belt comprises two operating sections entering and exiting the first curve and arranged on the operating plane.

Preferably, the carriage belt comprises two return sections entering and exiting the second curve and arranged on the return plane.

Preferably, said operating sections are connected to said return sections each by means of a respective vertical curve.

Preferably, the vertical curve is 180° which develops around a carriage shaft.

Preferably, the carriage shaft is arranged along a horizontal direction.

Preferably, the carriage shaft is mechanically connected to a drive unit for driving the carriage belt.

Preferably, the carriage belt developing on the operating plane, slides on a support and guide plane, configured to support the carriage belt and to guide it along the desired path.

Preferably, the support and guide plane extends outwardly of the carriage path to also support the portion of the inlet and outlet belt or of the inner belt alongside which the carriage belt for transferring the articles is placed.

Preferably, the inner belt runs along a closed loop-shaped path.

Preferably, the inner belt flows following a two-level path passing from the operating plane on which the articles move to the return plane below and substantially parallel to the operating plane.

Preferably, the inner belt comprises a first curvilinear portion forming a curve of at least 180° placed on the operating plane.

Preferably, the first curvilinear portion connects the first operating branch to the second operating branch.

Preferably, the inner belt comprises a second curvilinear portion forming a curve of at least 180° placed on the return plane underlying the operating plane.

Preferably, the second curvilinear portion connects a first return branch to a second return branch in turn connected to said first operating branch and second operating branch each one by means of a vertical arc portion.

Preferably, the vertical arc is 180° and develops around an inner shaft arranged along the horizontal direction.

Preferably, the vertical shaft is mechanically connected to the drive unit of the inner conveyor.

Preferably, the first and second curvilinear portions form a curve developing along a portion of the circumference greater than 180°.

Preferably, the first and second curvilinear portions of the inner conveyor comprise a disc rotating about a central vertical axis.

Preferably, said disc is coplanar to the operating plane and the return plane respectively.

Preferably, the first operating branch and the second operating branch are adjacent to each other.

Preferably, the apparatus comprises a movable mat configured to close a space at the front and at the back of the carriage.

Preferably, the movable mat is comprised between the inlet conveyor and the outlet conveyor.

Preferably, the movable mat is comprised between the inlet conveyor and the inner conveyor.

Preferably, the movable mat is comprised between the outlet conveyor and the inner conveyor.

Preferably, the mat is coplanar to said conveyors.

Preferably, the mat moves integral with the carriage.

Preferably, the carriage comprises drive means for the movement thereof.

Preferably, the drive means comprise a belt drive.

Preferably, the belt is placed in the centre of the carriage.

Preferably, the first and second curvilinear portions slide within fixed guides.

In particular, in a second aspect thereof, the present invention provides a carriage that can be installed in an apparatus comprising an inlet conveyor and an outlet conveyor, for diverting and accumulating a flow of articles from an upstream source to a downstream one along a path comprising a carriage belt, configured as a closed loop and adapted to slide endlessly in order to transfer the flow of articles from the inlet conveyor to the outlet conveyor.

Preferably, said carriage is adapted to translate along said inlet conveyor and outlet conveyor according to two opposite forward and return directions, so as to widen or reduce the path of deviation of the flow of articles.

Preferably, the carriage belt slides following a two-level path.

Preferably, the carriage belt slides following a two-level path passing from an operating plane placed at the same level as the inlet conveyor or outlet conveyor on which the articles move to a return plane below and substantially parallel to the operating plane.

These and other objects are reached by the characteristics of the invention as set forth in the independent claims. The dependent claims outline preferred and/or particularly advantageous aspects of the invention.

Said objects and advantages are all achieved by the improved dynamic accumulator apparatus according to the present invention, which is characterized by the provisions of the claims below.

### BRIEF DESCRIPTION OF THE DRAWINGS

These and other features will be more apparent from the following description of certain embodiments illustrated by way of non-limiting example in the accompanying drawings.
- Figure 1: shows a plan view of the apparatus for accumulating a flow of articles, comprising two carriages;
- Figure 1a: shows an axonometric view of a detail of the apparatus, in particular the first curvilinear portion of the inner conveyor;
- Figure 1b: shows an axonometric view of a detail of the apparatus, in particular the second curvilinear portion of the inner conveyor;

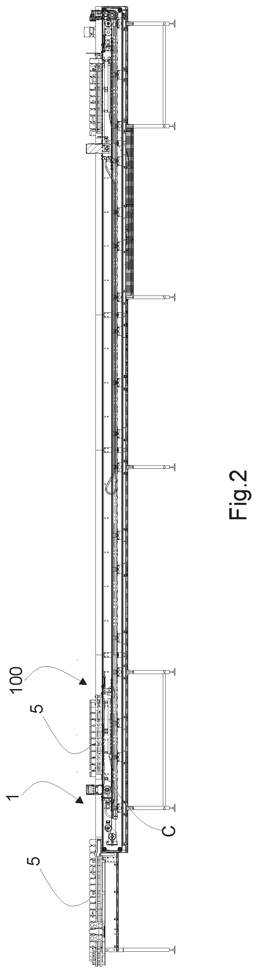

- Figure 2: shows a side view of the apparatus;

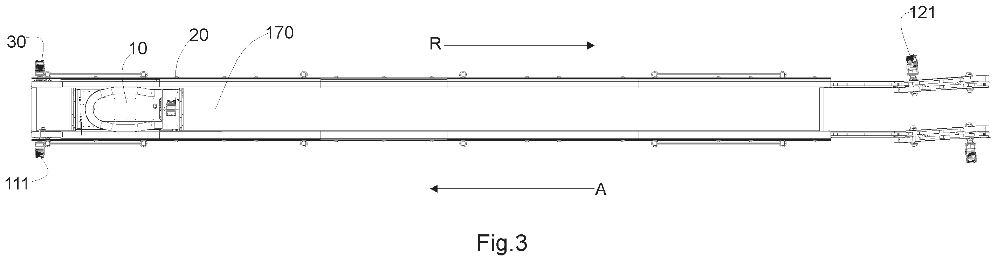

- Figure 3: shows a plan view of the apparatus for accumulating a flow of articles, comprising a carriage;

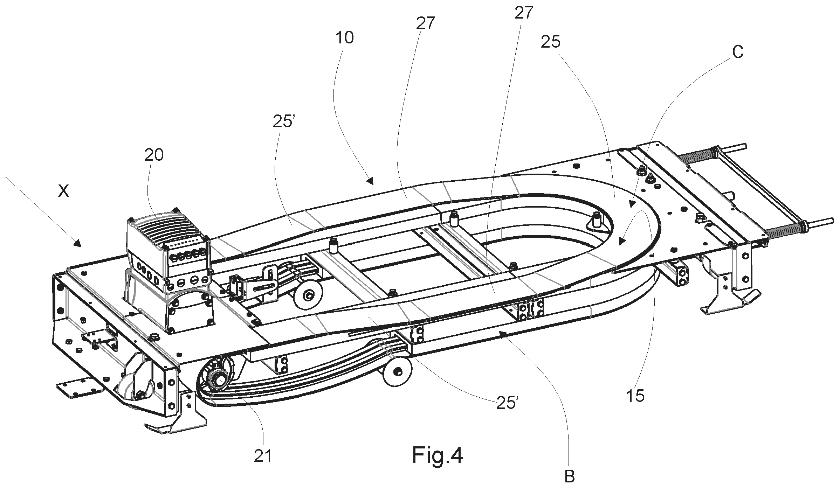

- Figure 4: shows an axonometric view of the carriage, in particular the carriage belt as seen from above;

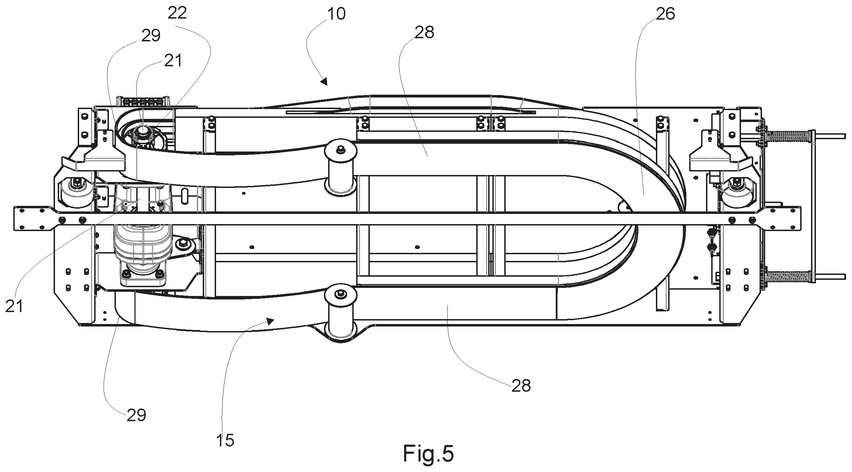

- Figure 5: shows an axonometric view of the carriage, specifically the carriage belt as seen from below;

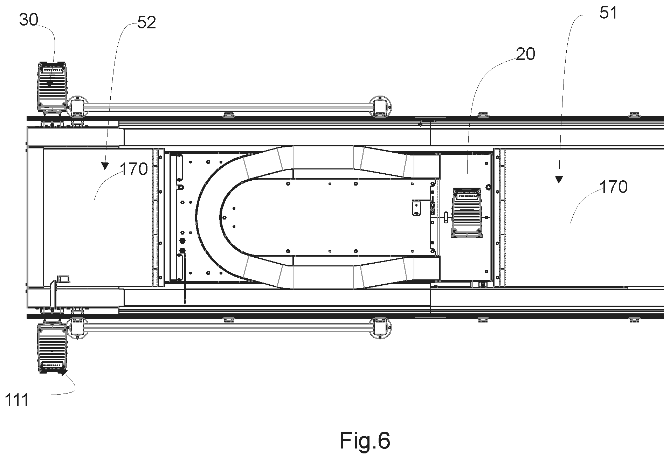

- Figure 6: shows a plan view of the carriage in the apparatus;

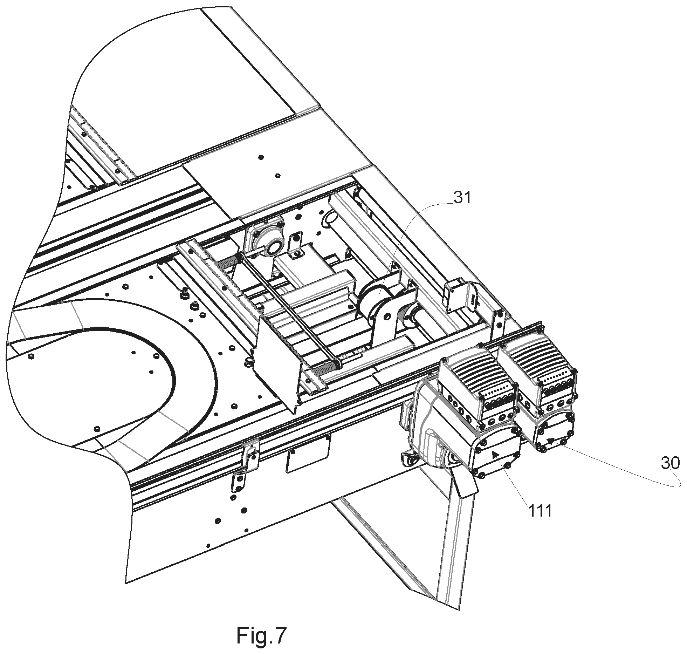

- Figure 7: shows an axonometric view of a detail of the apparatus, in particular the area containing the belt and the carriage motors;

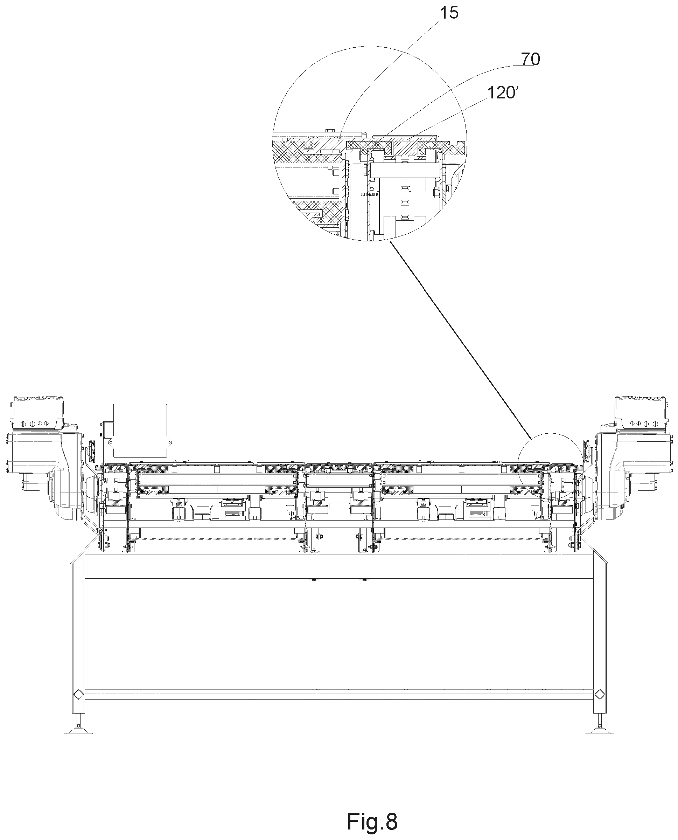

- Figure 8: shows a cross-sectional view of the apparatus, in particular a detail illustrating the support and guide plane between the carriage and the inlet or outlet belt;

### DESCRIPTION OF THE INVENTION

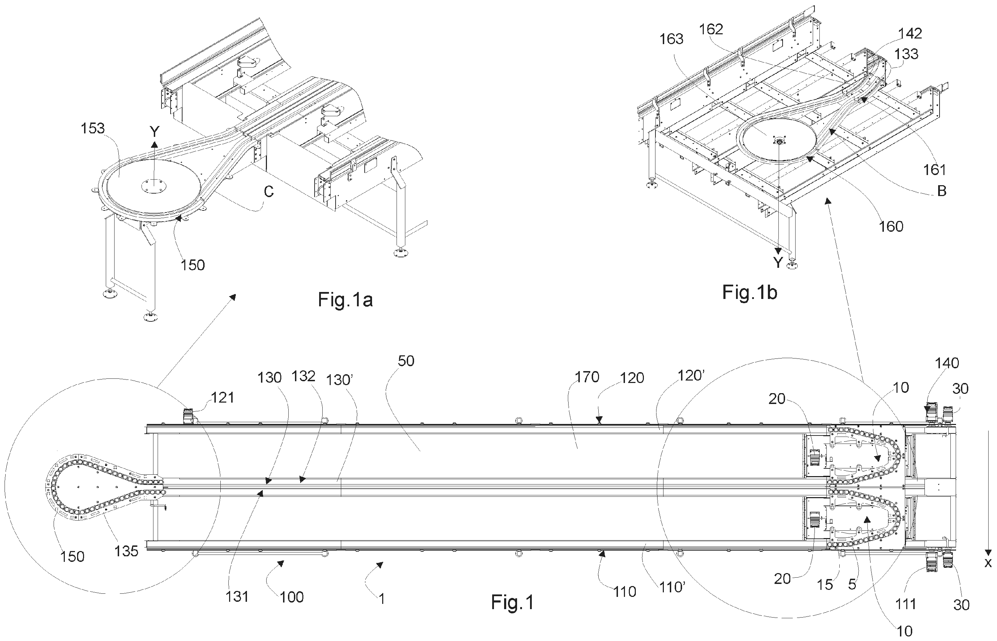

Figure 1 shows an accumulator apparatus 100 for diverting and accumulating a flow of articles 5 from an upstream source to a downstream destination.

The apparatus generally comprises a plurality of conveyor belt systems that are interconnected to form a dynamic path that can be extended or shortened.

This equipment is generally installed within a production line for accumulating articles supplied by a first machine or station of the production line before transferring them to a subsequent machine or station of the production line that receives them.

This makes it possible to compensate for any slowdowns or stoppages in the second machine or in any machines downstream of it, without having to stop the first machine or any other machines upstream of it as well.

Generally, the apparatus comprises an inlet conveyor 110 and an outlet conveyor 120; said conveyors are usually arranged in parallel with one another and determine, respectively, the inlet and outlet sections of a path P. That is to say, the inlet conveyor 110 connects the entire apparatus 100 to the first station, which supplies the articles 5, whilst the outlet conveyor 120 connects the apparatus 100 to the second station.

A dosing apparatus, not shown in the figure, may be located at the inlet to the accumulator 100, usually on the inlet conveyor 110 or upstream of it.

The purpose of said dosing apparatus is to maintain constant spacing between the articles 5, thereby preventing one article 5 from being pressed against another, whilst also preventing excessive gaps between the articles 5, which would impair the accumulation capacity of the accumulator 100.

Generally said inlet conveyor 110 and outlet conveyor 120 comprise an inlet belt 110' and an outlet belt 120', respectively, preferably of the modular chain type.

Generally said inlet conveyor 110 and outlet conveyor 120 comprise an inlet drive unit 111 and an outlet drive unit 121, respectively, so as to pull the respective inlet belt 110' and outlet belt 120'.

Preferably, said inlet drive unit 111, 121 is positioned at a final end of the inlet conveyor 110 and the outlet conveyor 120 so that the inlet and outlet belts 110', 120' operate under tension rather than compression.

Generally, the inlet conveyor 110 and the outlet conveyor 120 delimit an inner area 50 within which a movable carriage 10 is located.

In particular, said carriage 10 is configured to move in parallel with said inlet and outlet conveyors 110, 120.

In fact, said carriage 10 comprises a carriage motor unit 30 which enables the carriage 10 to move in two mutually opposite directions, parallel to the conveyors 110 and 120, which we refer to as the forward direction A and the return direction R of the carriage 10.

Furthermore, the carriage 10 forms a connection between said conveyors 110 and 120 at various possible points along the straight section, thereby increasing or decreasing the deviation distance P that the flow of articles 5 must travel along.

The total length of the path P therefore varies depending on the position of the carriage 10.

Preferably, said carriage motor unit 30 comprises a belt drive 31, which is preferably mounted in a central position on the carriage 10.

We shall not go into further detail regarding the possible solutions for moving the carriage 10, as these are well known to a person skilled in the art and, in any case, do not limit the scope of the invention.

In the preferred embodiment, the carriage 10 comprises its own carriage belt 15, which is configured to connect the aforementioned inlet and outlet belts 110', 120'.

In particular, the alignment of the carriage 10 with the inlet conveyor 110 and the outlet conveyor 120 on the same level enables the transfer of the flow of articles 5 from the inlet conveyor 110 to the outlet conveyor 120.

The articles 5 therefore travel resting on the inlet belt 110', before moving onto the carriage belt 15 and then onto the outlet belt 120'.

The present invention provides that the apparatus 100 may comprise a single carriage 10 or two or more carriages 10.

Preferably, each of them comprises a respective carriage belt 15, and each carriage belt 15 is preferably configured as a closed loop and is adapted to slide endlessly.

Thanks to this solution, each carriage 10, together with its own carriage belt 15, forms a portion of path P.

In the embodiment in which two or more carriages 10 are present within the inner area 50, the apparatus comprises an inner conveyor 130.

Said inner conveyor 130 is interposed between the carriages 10 and defines a further portion of path P.

In particular, said inner conveyor 130 comprises a first operating branch 131 and a second operating branch 132, along which an inner belt 130' slides, configured to support and move the flow of articles 5 along the path P, positioned between one carriage 10 and the adjacent one.

These operating branches 131 and 132 are substantially parallel to the inlet and outlet belts 110 and 120, and preferably the inner belt 130' and the inlet and outlet belts 110' and 120' are coplanar on an operating plane C.

In particular, in a configuration with two carriages 10, the alignment of the first carriage 10 with the inlet conveyor 110 allows the flow of articles 5 to be transferred from the inlet conveyor 110 to the first operating branch 131 of the inner conveyor 130, continuing the flow of articles 5 onto the second operating branch 132, then onto the second carriage 10 and finally onto the outlet conveyor 120.

The articles 5 therefore travel resting on the inlet belt 110', before moving onto the belt of the first carriage 15, then onto the inner belt 130' and finally onto the outlet belt 120'.

In the preferred embodiment, in which there are two or more carriages 10, each of them moves in parallel with the inlet 110 and outlet 120 conveyor belts and the operating branches 131, 132 of the inner conveyor 130 independently of one another; that is to say, each carriage 10 translates in two opposite forward A and return R directions, by an equal or different distance with respect to the adjacent carriage 10, so as to widen or reduce the path of deviation P of the flow of articles 5 independently, depending on the requirements of the operating line.

In fact, in a preferred embodiment, each carriage 10 is equipped with its own carriage motor unit 30, configured to drive the entire carriage 10 and move it parallel to the inlet conveyor 110 and outlet conveyor 120.

This allows each carriage 10 to be moved independently of the others, thereby increasing the accumulation flexibility.

In preferred embodiments, the carriage belt 15 is configured as a closed loop and is driven by a drive unit 20 to slide endlessly.

In a preferred embodiment, the belt of the carriage 15 is a modular chain comprising a lower surface provided with connecting elements for power transmission and for its movement.

In a preferred embodiment, the carriage belt 15 follows a two-level path, namely two superimposed planes that are parallel to one another.

Specifically, an upper level corresponding to operating plane C is configured to support and move the articles 5 along a portion of path P, whilst a lower level situated below the operating plane C is referred to as the return plane B, wherein the belt 15 slides to return to a position suitable for operation.

Generally, the operating plane C is placed at the same level as the inlet and outlet belts 110' and 120' and the inner belt 130', on which the articles 5 move.

In this way, the path P taken by the articles 5 develops entirely on the same plane.

In the preferred form of the invention described above, the carriage belt 15 follows a closed loop path comprising a first curve 25, preferably of 180°, which is arranged on the working plane C, and a second curve 26, preferably of 180°, which is arranged on the return plane B.

The first curve 25 is configured to divert the flow of articles 5, forcing them to pass from the inlet conveyor 110 to the outlet conveyor 120, or from the inlet conveyor 110 to the inner conveyor 130, or from the inner conveyor 130 to the outlet conveyor 120.

In a preferred embodiment of the invention, the carriage belt 15 comprises two operating sections 27; specifically, these sections are extensions of the first curve 25 arranged along the operating plane C, and constitute the inlet and outlet sections of the first curve 25. Said two operating sections 27 may be straight, as shown in the figure.

Said first curve 25, as shown in the figure, is connected to the two operating sections 27 by means of two connecting sections 25', which are preferably inclined with respect to the two operating sections 27, but lie in the same operating plane C.

The presence of these connecting sections 25' makes it possible to reduce the length of the carriage belt 15 at the point where it passes from the conveyor belts 110, 120 and 130 to the operating sections 27, a process known in the trade as 'side-by-side transfer'.

In the preferred embodiment, the carriage belt 15, which develops on the operating plane C, slides along a support and guide surface 70, configured to support the carriage belt 15 and guide it along the desired path.

Said support and guide plane 70 guides the carriage belt 15 to pass from the operating sections 27 to the connecting sections 25' and to form the first curve 25.

An advantageous feature is that said support and guide plane 70 extends beyond the path of the carriage belt 15 so as to simultaneously also support the portion of inlet and outlet belt 110', 120' or of inner belt 130' alongside which the carriage belt 15 runs for the transfer of articles 5.

This provides a cost-effective solution that ensures the path P is coplanar from the carriage belt 15 to the inlet and outlet belts 110', 120' or inner belt 130'.

This reduces the risk of adjustments being required to prevent articles 5 from getting stuck when passing from the carriage belt 15 to the inlet and outlet belts 110', 120' or the inner belt 130'.

According to a preferred embodiment of the invention, the carriage belt 15 comprises two return sections 28; in particular, said sections are extensions of the second curve 26 arranged along the return plane B. Said two return sections 28 may be straight, as shown in the figure.

The first curve 25 and the second curve 26 can be superimposed as shown in the figure, that is to say, arranged one above the other in essentially the same position.

According to the preferred embodiment of the invention, the operating sections 27 of the first curve 25 are connected to the return sections 28 of the second curve 26, thereby forming a closed loop; in particular, the connection takes place by means of a respective pair of vertical curves 29.

Preferably, each vertical curve 29 has an amplitude of 180°.

According to a preferred embodiment, at this vertical curve 29, the carriage belt 15 develops around a carriage shaft 21, which is arranged along a horizontal direction X, transverse to the operating sections 27 and return sections 28.

In particular, two pinions 22 may be provided on the carriage shaft 21, each adapted to mesh with the carriage belt 15 at the vertical curves 29.

In particular, said pinions 22 mesh with the connecting elements located on the lower surface of the modular chain of the carriage belt 15.

Preferably, the carriage shaft 21 is mechanically connected to the drive unit 20, which is configured to drive the sliding of the carriage belt 15.

This allows the belt of the carriage 15 to be driven in such a way that the drive unit 20 can transmit sufficient power to pull even heavy articles 5.

According to the preferred embodiment, the inner belt 130' of the inner conveyor 130 runs along a closed loop-shaped path and said path comprises sliding on two levels, passing from the upper level to the lower level and vice versa.

According to a preferred aspect, the inner belt 130' is a modular chain comprising a lower surface provided with connecting elements for power transmission and for its movement.

In particular, the upper level corresponds to the operating level C and is configured to support the articles 5 on its surface, while the lower level develops on the return plane B, on which the inner belt 130' runs before returning to the upper level C to receive the articles 5 once again.

Said operating plane C and return plane B are essentially parallel to one another.

The operating plane C corresponds to the upper level of the carriage belt 15, whereas the return plane B may be the same as the lower level of the carriage belt 15, but may also be a different plane, provided it is always situated below the operating plane C.

According to the preferred form of the invention, said inner belt 130' comprises a first curvilinear portion 150, forming a curve of at least 180° that extends along the operating plane C; said curvilinear portion connects to the first operating branch 131 and the second operating branch 132, which are preferably parallel to one another.

According to the preferred form of the invention, said inner belt 130' comprises a second curvilinear portion 160 forming a curve of at least 180°, which extends along the return plane B, that is to say, the plane lying beneath the operating plane C.

Preferably, said second curvilinear portion 160 connects to a first return branch 161 and a second return branch 162, which extend along the return plane B.

The first curvilinear portion 150 and the second curvilinear portion 160 may be positioned at a distance from one another as shown in the figure, that is to say, arranged one above the other but in different positions. In the figure, the second curvilinear portion 160 is arranged at the inlet/outlet of the accumulator 100, while the first curvilinear portion 150 is arranged at the opposite end of the accumulator 100.

Said first return branch 161 and second return branch 162 are in turn connected to the first operating branch 131 and the second operating branch 132, respectively, each by means of a vertical arc portion 133, so that the belt 130' forms a closed loop.

In particular, the vertical arc portion 133 slides around an inner shaft, arranged along a horizontal axis X, orthogonal to the first and second operating branches 131 and 132.

In particular, on said inner shaft two inner pinions 142 may be provided, each adapted to mesh with the inner belt 130' at the vertical arc portions 133.

In particular, said inner pinions 142 mesh with the connecting elements placed on the lower surface of the modular chain of the inner belt 130'.

Preferably, said inner shaft is mechanically connected to a single motor unit 140, configured to drive the sliding of the inner belt 130'.

This makes it possible to move the inner belt 130' such that a single motor unit 140 can transmit all the power required to pull even heavy articles 5.

Thanks to this solution, the apparatus 100 is able to convey heavier loads and cover longer distances.

According to the preferred form of the invention, the first and/or second curvilinear portions 150, 160 of the inner belt 130' form a curve developing along a circumference portion greater than 180°.

Thanks to this solution, the first and second operating branches 131 and 132, which extend from the ends of the first curvilinear portion 150, are closer to one another than they would be if the curvilinear portion were to extend along a circumference of just 180°.

Similarly, the first return branch 161 and the second return branch 162, which extend from the ends of the second curvilinear portion 160, are closer to one another than a curvilinear portion extending along a circumference portion of only 180°.

This feature is particularly advantageous because the first and second operating branches 131, 132 and/or the first and second return branches 161, 162 are preferably adjacent to one another; in this way, they are spaced sufficiently apart to accommodate the sheet metal structures housing the inner conveyor 130 along those portions, whilst at the same time taking up less space at the sides.

In a preferred embodiment of the invention, the first and second curvilinear portions 150, 160 of the inner belt 130' slide within fixed guides 135; in other words, said curvilinear portions 150, 160 are housed within a structure that is not movable.

According to an embodiment of the invention the first and second curved portions 150, 160 of the inner belt 130' comprise a disc 153, 163 rotating about a central vertical axis Y, and said disc 153, 163 is preferably coplanar with the operating plane C and the return plane B, respectively.

In preferred embodiments, the apparatus 100 comprises a mat 170 to prevent the articles 5 from falling accidentally during the flow. In fact, said mat 170 is adapted to bridge the gap between the conveyor belts 110, 120 and 130.

In particular, this is the space at the front and back 51, 52 of the carriage 10.

Generally speaking, said mat 170 is movable, so as to adapt to the space created during the translation of the carriage 10 parallel to the inlet 110 and outlet 120 conveyor belts. In fact, said mat 170 may comprise a motor or may be mechanically connected to the carriage 10 itself, moving in unison with it and being pulled by it.

Preferably, the belt 31 for pulling the carriage 10 should be positioned below the mat 170, so that the latter covers it.

It in any case is intended for that described above to be given by way of non-limiting example; therefore possible detail variants that may be required for technical and/or functional reasons are considered from now as to fall within the same protective scope defined by the claims below.

## Claims

1. Apparatus (100) for diverting and accumulating a flow of articles (5) from an upstream source to a downstream source, along a variable path (P) comprising at least one inlet conveyor (110) and one outlet conveyor (120), parallel to each other which determine respectively the inlet section and the outlet section of the path (P) and define an inner area (50) in which a carriage (10) comprising a carriage belt (15) moves, which is configured as a closed loop and is adapted to slide endlessly to transfer the flow of articles (5), from an inlet belt (110') of the inlet conveyor (110) to an outlet belt (120') of the outlet conveyor (120), said carriage (10) adapted to translate along said inlet conveyor (110) and outlet conveyor (120) according to two opposite forward (A) and return (R) directions, so as to widen or reduce the path (P) of deviation of the flow of articles (5), **characterised in that** the carriage belt (15) slides following a two-level path passing from an operating plane (C) placed at the same level as the inlet conveyor (110) or outlet conveyor (120) on which the articles (5) move to a return plane (B) below and substantially parallel to the operating plane (C).

2. Apparatus (100) for diverting and accumulating a flow of articles (5) from an upstream source to a downstream source, along a variable path (P) comprising two or more carriages (10) arranged in an inner area (50) between an inlet conveyor (110) and an outlet conveyor (120), parallel to each other determining respectively the inlet section and the outlet section of the path (P) and comprising in said inner area (50) at least one inner conveyor (130) comprising a first operating branch (131) and a second operating branch (132) along which an inner belt (130') slides substantially parallel to the inlet and outlet belt conveyors (110, 120) and on a same operating plane (C), and said first operating branch (131) and second operating branch (132) are interposed between a carriage (10) and the adjacent one, wherein said carriages (10) each comprise a respective carriage belt (15) which is configured as a closed loop and is adapted to slide endlessly to transfer the flow of articles (5), from an inlet belt (110') of the inlet conveyor (110) to an outlet belt (120') of the outlet conveyor (120), and/or to the inner belt (130'), **characterised in that** said carriages (10) translate along said inlet conveyor (110) or outlet conveyor (120) and along the inner conveyor (130) according to two opposite forward (A) and return (R) directions so as to widen or reduce the path (P) of deviation of the flow of articles (5), each carriage (10) translating independent of the adjacent carriage (10).

3. Apparatus (100) according to claim 2, **characterised in that** the carriage belt (15) of said carriage (10) slides following a two-level path passing from the operating plane (C) placed at the same level as the inlet conveyor (110) or outlet conveyor (120) on which the articles (5) move to the return plane (B) below and substantially parallel to the operating plane (C).

4. Apparatus (100) according to any one of the preceding claims, wherein the carriage belt (15) comprises a first curve (25) preferably of 180° arranged on the operating plane (C) to divert the flow of articles (5) by 180° and a second curve (26) preferably of 180° arranged on the return plane (B).

5. Apparatus (100) according to claim 4, wherein the carriage belt (15) comprises two operating sections (27) entering and exiting the first curve (25) and arranged on the operating plane (C) and two return sections (28) entering and exiting the second curve (26) and arranged on the return plane (B), said operating sections (27) being connected to said return sections (28) each by means of a respective vertical curve (29) preferably of 180° which develops around a carriage shaft (21) arranged along a horizontal direction (X), and preferably mechanically connected to a drive unit (20) for driving the carriage belt (15).

6. Apparatus (100) according to any one of the preceding claims, wherein the carriage belt (15) developing on the operating plane (C), slides on a support and guide plane (70), configured to support the carriage belt (15) and to guide it along the desired path, wherein said support and guide plane (70) extends outwardly of the carriage path (10) to also support the portion of the inlet and outlet belt (110', 120') or of the inner belt (130') alongside which the carriage belt (15) for transferring the articles (5) is placed.

7. Apparatus (100) according to any one of claims 2 to 6, wherein the inner belt (130') runs along a closed loop-shaped path, and flows following a two-level path passing from the operating plane (C) on which the articles (5) move to the return plane (B) below and substantially parallel to the operating plane (C).

8. Apparatus (100) according to any one of claims 2 to 7, wherein the inner belt (130') comprises a first curvilinear portion (150) forming a curve of at least 180° placed on the operating plane (C) and connecting the first operating branch (131) to the second operating branch (132), and comprises a second curvilinear portion (160) forming a curve of at least 180° placed on the return plane (B) underlying said operating plane (C) which connects a first return branch (161) to a second return branch (162) in turn connected to said first operating branch (131) and second operating branch (132) each one by means of a vertical arc portion (133) preferably of 180° developing around an inner shaft arranged along the horizontal direction (X), preferably mechanically connected to a drive unit (140) of the inner conveyor (130).

9. Apparatus (100) according to claim 8, wherein the first and second curvilinear portions (150, 160) form a curve developing along a portion of the circumference greater than 180°.

10. Apparatus (100), according to any one of claims 8 to 9, wherein the first and second curvilinear portions (150, 160) of the inner conveyor (130) comprise a disc (153, 163) rotating about a central vertical axis (Y), said disc (153, 163) is coplanar to the operating plane (C) and the return plane (B) respectively.

11. Apparatus (100), according to any one of claims 2 to 10, wherein the first operating branch (131) and the second operating branch (132) are adjacent to each other.

12. Apparatus (100) according to any one of the preceding claims, comprising a movable mat (170) configured to close a space (51, 52) at the front and at the back of the carriage (10) between the inlet conveyor (110) and the outlet conveyor (120), or between the inlet conveyor (110) and the outlet conveyor (120) with the inner conveyor (130).

13. Apparatus (100), according to claim 12, wherein the mat (170) is coplanar to said conveyors (110, 120, 130) and preferably moves integral with the carriage (10).

14. Apparatus (100), according to any one of the preceding claims, wherein the carriage (10) comprises drive means (30) for the movement thereof which preferably comprise a belt drive (151).

15. Carriage (10) which can be installed in an apparatus (100) comprising an inlet conveyor (110) and an outlet conveyor (120) for diverting and accumulating a flow of articles (5) from an upstream source to a downstream source along a path (P) comprising a carriage belt (15), configured as a closed loop and adapted to slide endlessly to transfer the flow of articles (5), from the inlet conveyor (110) to the outlet conveyor (120), said carriage (10) adapted to translate along said inlet conveyor (110) and outlet conveyor (120) according to two opposite forward (A) and return (R) directions, so as to widen or reduce the path (P) of deviation of the flow of articles (5), **characterised in that** the carriage belt (15) slides following a two-level path passing from an operating plane (C) placed at the same level as the inlet conveyor (110) or outlet conveyor (120) on which the articles (5) move to a return plane (B) below and substantially parallel to the operating plane (C).
